Europäisches Patentamt

European Patent Office

Office européen des brevets

(11) Publication number: 0 178 761
A1

## EUROPEAN PATENT APPLICATION

(21) Application number: 85305898.0

(22) Date of filing: 19.08.85

(51) Int. Cl.⁴: **G02B 6/38** , G02B 6/28

(30) Priority: 20.08.84 GB 8421104

(43) Date of publication of application:
23.04.86 Bulletin 86/17

(84) Designated Contracting States:
AT BE CH DE FR GB IT LI LU NL SE

(71) Applicant: BRITISH TELECOMMUNICATIONS plc
British Telecom Centre 81 Newgate Street
London EC1A 7AJ(GB)

(72) Inventor: McCartney, David John
15 Somerset Road
Ipswich Suffolk, IP4 4BZ(GB)
Inventor: Hill, Alan Michael
The Cottage, The Street Stonham Aspal
Stowmarket Suffolk, IP4 6AQ(GB)
Inventor: Clements, Geoffrey Edward
267 Humber Doucy Lane
Ipswich Suffolk, IP4 3PF(GB)

(74) Representative: Wolff, Eric et al
Intellectual Property Unit British Telecom Room
1304 151 Gower Street
London WC1E 6BA(GB)

(54) Optical fibre terminations.

(57) An optical fibre array termination is formed from two housing parts (14,15) each of which has a flat surface (21) with a step (17,18) on the surface, the height of the step corresponding to a fibre diameter. One part is placed over the other so that a rectangular aperture (11) is defined between the steps and a plurality of optical fibres are closely juxtaposed in the aperture. The parts are then secured together.

Fig.1.

Rank Xerox

## OPTICAL FIBRE TERMINATIONS

This invention relates to terminations for arrays of optical fibres.

A number of techniques are currently under investigation which require a number of optical fibres grouped together in a single termination. It is important that the fibres in this group or array are located precisely particularly in the case of monomode fibres. For example, in a wavelength multiplexer light emerging from one fibre in an array is reflected from a grating into another fibre in the array. Monomode fibres have cores which typically are a few microns in diameter and alignment tolerances of better than 1 micron required in the array.

The present invention is concerned with a technique for forming an optical fibre array termination which can meet this requirement.

According to the present invention there is provided a method of forming an optical fibre array termination comprising forming a first housing part having a flat surface with a step thereon, said step having a height corresponding to the diameter of each optical fibre, forming a second housing part similar to the first housing part, locating one part on the other so that a rectangular aperture is defined between said steps, said fibres being closely juxtaposed in said aperture, and securing the housing parts in position.

The housing parts may be formed from a block of suitable material on which is formed said step, the block being cut into two perpendicularly to said step.

The block may be a block of quartz and the step may be formed by glueing a wafer of quartz onto the block. Alternatively, the step can be formed by cutting.

The blocks can be glued together to secure them in position.

According to another aspect of the present invention there is provided an optical fibre array termination comprising a housing formed from two housing parts each having a stepped surface, the height of each step corresponding to the diameter of an optical fibre, the housing parts being located one on the other so that a rectangular aperture is defined between said steps, and a plurality of optical fibres closely juxtaposed in said aperture.

The invention will be described now by way of example only, with particular reference to the accompanying drawings. In the drawings:

FIGURE 1 is an end view of an optical fibre array termination constructed in accordance with the present invention, and

FIGURE 2 is a schematic view showing an application of the termination shown in Figure 1.

An optical fibre array termination comprises a plurality of juxtaposed optical fibres 10 which are located in a rectangular aperture 11 in a housing 12. The housing is formed from two housing parts 14,15 each of which has a stepped surface 17,18. The rectangular aperture is defined between the two steps.

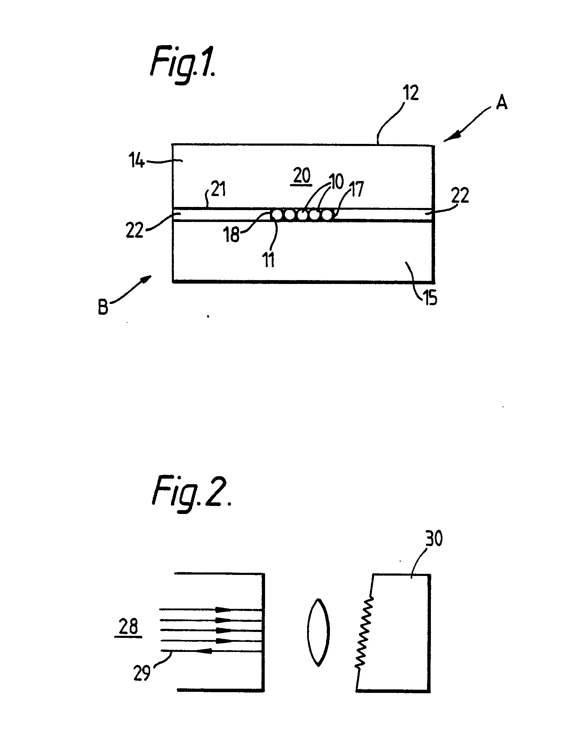

The array shown in Figure 1 is formed as follows. Each housing part is formed initially. Each housing part comprises a block 20 of quartz with a flat surface 21. A quartz wafer 22 is glued onto the surface 21 using a suitable adhesive. The wafer is then machined so that the step 17 has a height which corresponds to the diameter of the optical fibres to be used in the array. The other housing part can then be formed in the same way. It will be appreciated that the housing parts can be formed from either separate quartz blocks as described, each of which has a wafer attached thereto, or from a single block to which is attached a wafer, the block then being cut into two in a direction perpendicular to the step.

When the two housing parts have been formed one is placed on the other as shown in Figure 1 and the fibres are located in the rectangular aperture. An appropriate adhesive is applied between the contacting portions of the housing parts, and between the fibres and housing parts. The two housing parts are then squeezed together by applying pressure along the directions shown by arrows A and B. This locates the fibres tightly within the aperture 11. The housing parts are then clamped in position to allow the adhesive to set.

Figure 1 shows an array with five fibres and such arrays have been produced satisfactorily using fibres having 125 um outer diameters. It will be appreciated that arrays with other numbers of fibres can be produced. The fibres can be monomode or multimode fibres.

The accuracy with which the fibres can be located makes the arrays suitable for many applications. One such application is shown in Figure 2. This drawing shows a grating multiplexer in which light from four fibres in a five fibre linear array 28 is multiplexed into the fifth fibre 29 using a grating 30. Other examples of devices in which the termination element may be used are optical switches and multichannel connectors and detectors.

**Claims**

1. A method of forming an optical fibre array termination comprising forming a first housing part having a flat surface with a step thereon, said step having a height corresponding to the diameter of each optical fibre, forming a second housing part similar to the first housing part, locating one part on the other so that a rectangular aperture is defined between the steps, said fibres being closely juxtaposed in said aperture, and securing the housing parts in position.

2. A method as claimed in claim 1, wherein the housing parts are formed from a block of suitable material on which is formed said step, the block being cut into two perpendicularly to said step.

3. A method as claimed in claim 1 or claim 2, wherein the block is a block of quartz and the step is formed by glueing a wafer of quartz onto the block.

4. A method as claimed in claim 1, wherein the step can be formed by cutting.

5. A method as claimed in any preceding claim, wherein the blocks are glued together to secure them in position.

6. An optical fibre array termination comprising a housing formed from two housing parts each having a stepped surface, the height of each step corresponding to the diameter of an optical fibre, the housing parts being located one on the other so that a rectangular aperture is defined between said steps, and a plurality of optical fibres closely juxtaposed in said aperture.

7. A method of forming an optical fibre array termination substantially as hereinbefore described.

8. Optical fibre array terminations whenever prepared by a method as claimed in any one of claims 1 to 5 or claim 7.

9. An optical fibre array termination substantially as hereinbefore described with reference to and as shown in the accompanying drawings.

## Fig.1.

## Fig.2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 318 873 (D.R. PORTER) * column 5, line 20 - column 6, line 51 * | 1,2,5 | G 02 B 6/38 G 02 B 6/28 |
| X | ELECTRONICS LETTERS, vol. 16, no. 15, 17th July 1980, pages 608, 609, Hitchin, GB; K. NOSU et al.: "Slab waveguide star coupler for multimode optical fibres" * figure 2 * | 1,2 | |
| A | EP-A-0 012 901 (SIEMENS AG) * page 4, line 4 - page 5, line 18, figure 2 * | 3 | |
| A | APPLIED OPTICS, vol. 19, no. 15, 1st August 1980, pages 2584-2588, New York, US; M. STOCKMANN et al.: "Planar star coupler for multimode fibers" * figure 3 * | | **TECHNICAL FIELDS SEARCHED (Int. Cl.4)**<br><br>G 02 B 6/28<br>G 02 B 6/38 |
| A | EDN MAGAZINE, vol. 26, no. 3, 4th February 1981, pages 73-74, Boston, Mass., US; T. ORMOND "Wavelength multiplex, demultiplex devices emerge from fiber-optic research" * figure 1 * | | |

The present search report has been drawn up for all claims

| Place of search | Date of completion of the search | Examiner |
|---|---|---|
| BERLIN | 10-12-1985 | FUCHS R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82